(19) Europäisches Patentamt
European Patent Office
Office européen des brevets

(11) **EP 2 399 096 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(21) Anmeldenummer: **10715657.2**

(22) Anmeldetag: **27.01.2010**

(51) Int Cl.:
*G01S 13/86* (2006.01)    *G01S 17/02* (2006.01)
*G06K 9/00* (2006.01)

(86) Internationale Anmeldenummer:
**PCT/DE2010/000087**

(87) Internationale Veröffentlichungsnummer:
**WO 2010/094253 (26.08.2010 Gazette 2010/34)**

(54) **VERFAHREN UND SYSTEM ZUR ERFASSUNG VON ZIELOBJEKTEN**

METHOD AND SYSTEM FOR DETECTING TARGET OBJECTS

PROCÉDÉ ET SYSTÈME DE DÉTECTION D'OBJETS CIBLES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.02.2009 DE 102009009896**

(43) Veröffentlichungstag der Anmeldung:
**28.12.2011 Patentblatt 2011/52**

(73) Patentinhaber: **Airbus Defence and Space GmbH 85521 Ottobrunn (DE)**

(72) Erfinder: **BODENMÜLLER, Albert 89179 Beimerstetten (DE)**

(74) Vertreter: **Meel, Thomas Airbus Defence and Space GmbH Patentabteilung 88039 Friedrichshafen (DE)**

(56) Entgegenhaltungen:
**WO-A1-99/28759     US-A1- 2003 005 030 US-A1- 2006 049 974**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 399 096 B1

## Beschreibung

Die Erfindung betrifft ein Verfahren und ein System zur Erfassung von Zielobjekten unter Verwendung eines bildgebenden elektro-optischen Bildsensors.

Zur Erfassung von Zielobjekten innerhalb eines Überwachungsbereichs sind Kombinationen verschiedener Sensoren besonders vorteilhaft, indem eine erste Sensoreinrichtung mit wenigstens einem ersten Sensor, beispielsweise eine Radaranlage und/oder ein passiver oder aktiver Lasersensor ein Zielobjekt detektiert und dazu einen ersten Zielparameter bestimmt und eine weitergehende Information mittels einer zweiten Sensoreinrichtung mit wenigstens einem zweiten Sensor gewonnen wird, wobei der zweite Sensor durch einen anderen Sensortyp gebildet ist als der erste Sensor. Als solche zweite Sensoren spielen insbesondere elektro-optische bildgebende Bildsensoren eine zunehmende Rolle aufgrund der Möglichkeit, durch Auswertung eines dabei gewonnenen Bildes Zielobjekte, welche mit anderen Sensoren nicht unterscheidbar sind, enger zu klassifizieren. Solche elektro-optischen Bildsensoren sind insbesondere für den sichtbaren oder den infraroten Spektralbereich ausgelegt.

Solche elektro-optische Bildsensoren stellen ein wichtiges Hilfsmittel zur Identifikation und Klassifikation von Zielen speziell im militärischen Bereich und bei hoheitlichen Aufgaben, wie z. B. polizeilicher Überwachung und Grenzsicherung dar.

Bei Systemen mit elektro-optischen Sensoren sind Verfahren bekannt, bei welchen diese Sensoren im rundum Suchbetrieb einen vorgebbaren Suchbereich absuchen um darin Ziele zu detektieren und dem Bediener anzuzeigen/darzustellen, um dann automatisch weiter zu suchen oder auf ein Bedienerkommando zur Fortsetzung der Suche zu warten. Auch werden bisher elektro-optische Sensoren von einem Bediener manuell gesteuert, der anhand der aktuellen Lagedarstellung, basierend auf anderen verfügbaren Sensoren und Lageinformationen von taktischen Datenlinks, den elektro-optischen Sensor manuell auf interessierende Ziele ausrichtet.

Es ist auch bekannt, bei mit elektro-optischen Sensoren ausgestatteten Drohnen oder ähnlichen unbemannten Flugzeugen dahingehend eine Optimierung vorzunehmen, dass aufgrund der taktischen Bodenlage ein optimaler Flugweg für die Drohne berechnet wird und aus mehreren möglichen Flugwegen der optimale Flugweg ausgesucht wird, um die Bodenlage mit den Sensordaten zu aktualisieren.

Es ist auch bekannt, dass bei einer stationären oder in einer bemannten fliegenden Plattform (z. B. Polizei Helikopter), bei welcher ein elektro-optischer Sensor fest oder von einem Bediener manuell ausgerichtet wird, die aktuelle Bildinformation einer automatischen Bildauswertung zugeleitet wird und die damit detektierten Ziele klassifiziert werden und diese Information in die Bildinformation eingeblendet wird, damit der Bediener auf potentiell interessierende Objekte aufmerksam gemacht wird bzw. die Detektionsfähigkeit des Bedieners unterstützt wird.

Der Informationsgehalt eines durch einen solchen Bildsensors aufgenommenen Bildes ist a priori hoch und die automatische Bildauswertung eines einzelnen Bildes ist rechenintensiv und zeitaufwändig, so dass bei einem Rundum-Suchbetrieb mittels eines optischen Bildsensors typischerweise nur langsam veränderlich Szenarien sinnvoll erfassbar und optisch auswertbar sind.

Bekannt ist daher, dass einem Betrachter eine auf anderen Sensoren, z. B. aktiven und/oder passiven Radar- und Lasersensoren basierende Lagedarstellung angezeigt wird und der Betrachter einen elektro-optischen Bildsensor auf in dieser Lagedarstellung erkennbare Zielobjekte ausrichtet, was auch als Einweisen des Bildsensors auf ein Zielobjekt bezeichnet wird. Die Bewertung der angezeigten Lagedarstellung und die Auswahl der Zielobjekte ist aber in hohem Maße subjektiv und wird insbesondere in Bedrohungsszenarien einer eventuell schnell wechselnden Situation und einer angemessenen Reaktion nicht gerecht.

Die US 2006/0049974 A1 beschreibt ein auch als ERIS (Exoatmospheric Reentry Vehicle Interceptor Subsystem) innerhalb der Strategic Defense Initiative bekanntes System, bei welchem zur Abwehr von ballistischen Mehrfach-Sprengköpfen eine Trägerrakete eine Mehrzahl von Abwehr-Flugkörpern in eine große Höhe bringt, um mit den Abwehr-Flugkörpern die Sprengköpfe vor Wiedereintritt in die Atmosphäre abzufangen und zu zerstören. Die Trägerrakete und die Abwehr-Flugkörper können Sensoren, insbesondere auch Bildsensoren enthalten. Die Sensorsignale können zwischen Abwehr-Flugkörpern und Trägerrakete und/oder einer Bodenstation ausgetauscht werden, um eine Analyse des erfassten Bereichs durchzuführen und um Abwehr-Flugkörper auf als bedrohlich eingestufte Objekte zu lenken, um diese zu zerstören.

Aus der US 2007/014695 A1 ist ein Multi-Sensor-System bekannt, bei welchem ein Radarsystem zur Erfassung und Verfolgung von Zielobjekten vorgesehen ist. Aus Zielparametern, welche durch das Radarsystem gewonnen werden, wird von mehreren Zielobjekten eines als prioritätshöchstes Ziel bewertet und ein Bildsensor wird auf dieses Ziel ausgerichtet. Das von dem Bildsensor aufgenommene Bild wird einem Betrachter, z. B. einem Piloten auf einem Bildschirm angezeigt. Auf Kommando des Betrachters wird der Bildsensor auf ein nächstes, dann prioritätshöchstes Ziel umgestellt. Als Kriterium zur Priorisierung sind insbesondere die Zielentfernung und die Zielgeschwindigkeit genannt. Bei einer Vielzahl von Zielobjekten im Überwachungsbereich, insbesondere bei potentiell bedrohlichen Zielen, ist die Gewinnung von Zusatzinformation durch den sukzessive auf eine Mehrzahl unterschiedlicher Zielobjekte ausrichtbaren Bildsensor noch diese bekannte Vorgehensweise aber nicht ausreichend.

Der vorliegenden Erfindung liegt daher die Aufgabe zugrunde, ein Verfahren und ein System zur Erfassung von Zielobjekten mit einem zweiten Sensor, insbesondere einem elektro-optischen Bildsensor anzugeben, welches eine bessere Erfassung auch schnell veränderlicher Szenarien ermöglicht.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Erfindung verbindet eine Überwachung eines Überwachungsbereichs durch eine erste Sensoreinrichtung mit wenigstens einem ersten Sensor, welcher kein elektro-optischer Bildsensor ist und vorzugsweise gegenüber dem zweiten Sensor eine schnelle Detektion von Zielobjekten innerhalb des Überwachungsbereichs durchführt, mit einer automatisierten Bestimmung eines prioritätshöchsten Zielobjekts und mit einer selbsttätigen Einweisung eines zweiten Sensors einer zweiten Sensoreinrichtung auf das prioritätshöchste Zielobjekt.

Die Bestimmung des prioritätshöchsten Zielobjekts unter mehreren aktuell detektierten Zielobjekten erfolgt durch Anwendung gespeicherter Bewertungskriterien auf den wenigstens einen Zielparameter und/oder andere zu dem Zielobjekt vorliegende Daten, welche zu den jeweiligen Zielobjekten mittels des wenigstens einen ersten Sensors der ersten Sensoreinrichtung gewonnen und gespeichert wurden. Zu verschiedenen Zielobjekten können unterschiedliche Parameter vorliegen. Verschiedene Bewertungskriterien können vorteilhafterweise auf unterschiedliche Parameter gerichtet sein. Parameter können auch das Fehlen von detektierbaren Größen beinhalten, beispielsweise als Wert Null eines eine Laseremission eines Zielobjekts beschreibenden Parameters, wenn das Ziel keine solche Laseremission zeigt.

Vorteilhafterweise kann bei der automatisierten Bewertung anhand der gespeicherten Bewertungskriterien zu jedem oder zumindest zu mehreren Zielobjekten jeweils ein diesen individuell zugeordneter Priorisierungswert als ein Wert auf einer eindimensionalen Skala bestimmt werden. Aus den Priorisierungswerten kann eine Rangfolge aufgestellt werden, welche von dem prioritätshöchsten Zielobjekt angeführt wird. Die Priorisierungswerte werden fortlaufend aktualisiert, so dass sich die Rangfolge dynamisch ändern kann. Typischerweise wird ein als prioritätshöchstes Zielobjekt von dem zweiten Sensor erfasstes Zielobjekt danach in der Rangfolge abfallen, da eine sofortige erneute Erfassung durch den zweiten Sensor in der Regel keinen großen Informationszuwachs erbringt und daher keine hohe Priorität hat. Ein neu von der ersten Sensoreinrichtung detektiertes Zielobjekt kann je nach dem Ergebnis der Anwendung der gespeicherten Bewertungskriterien bereits zuvor detektierte Zielobjekte in der Rangfolge überflügeln. Ein von dem zweiten Sensor erfasstes Zielobjekt kann danach schneller einer erneuten Erfassung unterworfen werden als ein Zielobjekt mit zeitlich weiter zurückliegender Detektion. Die Reihenfolge der Einweisung des zweiten Sensors auf die verschiedenen Zielobjekte weicht damit in der Regel von der Reihenfolge der zeitlichen Detektion durch die erste Sensoreinrichtung ab. Zielobjekte können auch aus der automatisierten Bewertung herausfallen, wenn z. B. ein Zielobjekt sich aus dem Überwachungsbereich entfernt oder wenn ein Zielobjekt definitiv als nicht weiter interessant eingestuft wird.

Mit der automatisierten Bewertung anhand gespeicherter Bewertungskriterien und der Einweisung des zweiten Sensors auf ein bei der Bewertung als prioritätshöchstes bestimmtes Zielobjekt ermöglicht eine im Rahmen der gespeicherten Bewertungskriterien optimierte Informationsgewinnung für die Gesamtheit der Zielobjekte, wobei der Beitrag eines einzelnen Zielobjekts zu der Gesamtinformation von der Fähigkeit des zweiten Sensors, in einer Einweisung auf ein Ziel weitere Zielparameter zu extrahieren, von dem Aufwand der Einweisung des zweiten Sensors auf das Zielobjekt und der Bedeutung des Ziels innerhalb der Gesamtsituation im Überwachungsbereich abhängen kann, was durch die gespeicherten Bewertungskriterien vordefiniert ist und insbesondere durch die genannten Priorisierungswerte vorteilhaft realisierbar ist.

Die erste Sensoreinrichtung zur Detektion von Zielobjekten kann als den wenigstens einen ersten Sensor oder mehrere erste Sensoren an sich bekannte Sensoren, wie z. B. aktive Radarsensoren oder aktive Lasersensoren für die Bestimmung von Raumwinkel und Entfernung eines Zielobjekts durch Aussenden elektromagnetischer Wellen und Empfang von an Zielobjekten rückgestreuten Anteilen enthalten, welche gegebenenfalls auch eine erste Klassifikation durchführen können. Erste Sensoren können auch passive Empfänger elektromagnetischer Strahlung sein, welche von einem Zielobjekt ausgesandte Strahlung, insbesondere Radar-, Funk- oder Laserstrahlung aufnehmen und eine Richtungsbestimmung oder Ortsbestimmung vornehmen.

Vorzugsweise ist wenigstens ein erster Sensor der ersten Sensoreinrichtung in fester räumlicher Zuordnung zu dem zweiten Sensor angeordnet. Insbesondere kann der zweite Sensor auf einem Land-, Wasser-, Luft- oder Raum-Fahrzeug angeordnet sein. Ein erster Sensor der ersten Sensoreinrichtung kann auch von dem zweiten Sensor der zweiten Sensoreinrichtung weiter entfernt und auch außerhalb vom Erfassungsbereich des zweiten Sensors angeordnet und auch relativ zu diesem entfernungs- und/oder richtungsveränderlich sein und den oder die Zielparameter eines detektierten Zielobjekts über eine Datenverbindung an den Ort der Bewertungseinrichtung übermitteln. Ein Zielobjekt kann sich dabei in einem Überschneidungsbereich des Überwachungsbereichs des ersten Sensors der ersten Sensoreinrichtung und des Überwachungsbereichs des zweiten Sensors befinden oder auch erst in den Überwachungsbereich des zweiten Sensors gelangen. Im folgenden sei, soweit nicht explizit anders angegeben, ohne Beschränkung der Allgemeinheit der Einfachheit halber davon ausgegangen, dass in bevorzugter Ausführung der wenigstens eine erste Sensor der Sensoreinrichtung und der wenigstens ein zweiter Sensor einer zweiten Sensoreinrichtung in fester räumlicher Zuordnung zueinander angeordnet sind und die Überwachungs-Winkelbereiche des ersten Sensors und des zweiten Sensors im wesentlichen übereinstimmen. Die erste Sensoreinrichtung kann mehrere erste Sensoren insbesondere unterschiedlichen Funktionstyps enthalten. Der Begriff des ersten Sensors soll diesen oder diese insbesondere hinsichtlich des Sensortyps von dem zweiten Sensor unterscheiden.

Ohne Beschränkung der Allgemeinheit sei nachfolgend der Einfachheit halber der wenigstens eine zweite Sensor der zweiten Sensoreinrichtung als bildgebender Sensor, insbesondere als elektro-optischer Bildsensor angenommen und die erste Sensoreinrichtung auch einfach nur als Sensoreinrichtung bezeichnet.

Die Sensoreinrichtung bestimmt auf bekannte Art je nach Funktionstyp des ersten Sensors die Richtung eines detektierten Zielobjekts relativ zu dem Bildsensor und zusätzlich wenigstens einen Zielparameter des Zielobjekts. Die Zielrichtung als ein azimutaler und/oder elevationaler Winkel kann bei nahe beieinander angeordnetem Bildsensor und erstem Sensor unmittelbar aus der Richtungsinformation des ersten Sensors gewonnen oder bei größerer Entfernung von Bildsensor und erstem Sensor aus einer von der Sensoreinrichtung ermittelten Zielposition und der Position des Bildsensors abgeleitet werden. Ein erster Zielparameter kann beispielsweise die Zielentfernung und/oder eine Bewegungsgröße des Zielobjekts, wie z. B. Geschwindigkeit und/oder Bewegungsrichtung sein. Die Bewegungsrichtung kann beispielsweise durch Spurbildung ermittelt werden. Die Geschwindigkeit kann je nach Betrag und Bewegungsrichtung aus einem Dopplersignal eines aktiven Sensors oder gleichfalls durch Spurbildung ermittelt werden. Ein anderer Zielparameter kann die Entfernung des Zielobjekts von dem Bildsensor sein.

Als weiterer abgeleiteter erster Zielparameter kann ein Aspektwinkel des Bildsensors auf das Zielobjekt bestimmt werden, welcher für eine Abschätzung des verwertbaren Informationsgehalts eines von dem Bildsensor aufzunehmenden Bild in noch näher zu beschreibender Weise bewertet werden kann.

Insbesondere mittels eines passiven Sensors der Sensoreinrichtung kann die Emission von Funk- oder Radarwellen oder Laserstrahlung durch ein Zielobjekt als ein Zielparameter bestimmt werden, wobei gegebenenfalls zusätzlich durch eine Signaturerkennungseinrichtung eine bestimmte Signatur, z. B. als Modulation, einer solchen Emission feststellbar ist und einen hinteren Zielparameter bilden kann.

Die mittels eines oder mehrerer erster Sensoren der Sensoreinrichtung bestimmten Zielparameter seien als erste Zielparameter bezeichnet. Zu einem Zielobjekt können mehrere erste Zielparameter vorliegen.

Von den in der Sensoreinrichtung detektierten Zielobjekten werden nicht notwendigerweise alle Zielobjekte bereits bei der ersten Erfassung einer weiteren Erfassung durch den Bildsensor zugeführt. Es kann auch vorgesehen sein, dass zuerst eine Signalverarbeitung, beispielsweise mit Spurbildung, in der Sensoreinrichtung selbst durchgeführt und/oder detektierte Zielobjekte von vorn herein aus der weiteren Bildsensor-Bearbeitung ausgeschlossen werden, beispielsweise eindeutig als Freund-Zielobjekte erkannte Zielobjekte.

Die zur weiteren Erfassung durch den Bildsensor vorgesehenen Zielobjekte werden jeweils mit einer einen Raumwinkel bezüglich des Bildsensors angebenden Richtungsinformation und mit zu dem jeweiligen Zielobjekt vorliegenden Zielparametern gespeichert und der weiteren Bearbeitung in einer Bewertungseinrichtung unterzogen. In der Bewertungseinrichtung sind Bewertungskriterien gespeichert, welchen sowohl die Zielrichtung als auch einzelne der Zielparameter und auch Kombinationen oder abgeleitete Werte aus diesen Größen unterzogen werden können.

Die Kriterien können absolute Kriterien darstellen, bei deren Nichterfüllung ein Zielobjekt von der weiteren Bearbeitung ausgeschlossen wird. Ein solches absolutes Kriterium kann beispielsweise die Entfernung des Zielobjekts von dem Bildsensor sein, wobei ab einer als Schwellwert vorgegebenen Maximalentfernung Ziele, welche weiter von dem Bildsensor entfernt sind, von der weiteren Bearbeitung ausgeschlossen werden, weil bei zu großer Entfernung die Zielauflösung im vom Bildsensor aufgenommenen Bild zu gering ist, um bei einer Bildauswertung eine verläßliche Aussage über das Zielobjekt gewinnen zu können. Ein anderes absolutes Ausschlußkriterium kann beispielsweise für einen Raumrichtungswinkelbereich gegeben sein, wenn in diesem Raumwinkelbereich ein Hindernis in der Sichtlinie des Bildsensors liegt, beispielsweise Schiffsaufbauten eines den Bildsensor tragenden Schiffes in maritimer Anwendung. Ein Zielobjekt, dessen Raumrichtung in einen solchen abgeschatteten Winkelbereich fällt, kann von dem Bildsensor nicht erfasst werden, so dass auch eine weitere Bewertung und eine Ausrichtung des Bildsensors auf ein solches Zielobjekt nicht sinnvoll ist. Ferner können beispielsweise innerhalb des Überwachungsgebiets des Bildsensors Flächenbereiche oder Raumbereiche vordefiniert sein, in welchen definitiv kein kritisches Ziel zu erwarten ist und in welchem detektierte Ziele von vorn herein als unkritisch eingestuft und nicht weiter bearbeitet werden.

Zielobjekte, welche durch solche absoluten Kriterien nicht frühzeitig ausgeschlossen werden, werden einer Bewertung in der Bewertungseinrichtung unterzogen, wobei zu Zielobjekten jeweils ein als Priorisierungswert bezeichneter Wert, insbesondere ein Zahlenwert auf einer eindimensionalen Skala bestimmt und dem Zielobjekt zugewiesen wird. Für die Bestimmung des Priorisierungswerts können typischerweise mehrere Zielparameter einschließlich der Raumrichtungsinformation herangezogen und einzeln oder in Kombination vorgegebenen Bewertungskriterien unterworfen werden.

Vorteilhafterweise ist wenigstens ein Bewertungskriterium vorgesehen, welches einen Binärwert als Ausgangswert liefert. Dies kann insbesondere durch Vergleich eines Zielparameters mit einem Schwellwert oder einem Wertebereich als Kriterium erfolgen, wobei der bei diesem Kriterium ausgegebene Binärwert beispielsweise den Wert Null (oder Falsch) erhält, wenn ein vorgegebenes Kriterium, beispielsweise Überschreiten eines Schwellwerts durch einen Zielparameter oder Lage eines Zielparameter innerhalb eines Bereichs nicht erfüllt ist und ansonsten den Wert Eins (oder Richtig) annimmt.

Es kann auch wenigstens ein Kriterium vorgesehen sein, welches als Ausgabewert einen mehrstelligen Binärwert liefert, indem beispielsweise eine Skala für einen Zielparameter in vier Bereiche unterteilt ist und den vier Bereichen Binärwertkombinationen von zwei Binärstellen zugeordnet sind.

Die derart aus Bewertungskriterien gewonnenen Binärwerte können in einer besonders vorteilhaften Ausführung zu einem mehrstelligen binären Indexwert zusammengefasst werden, dessen einzelne Binärstellen in eindeutiger Weise bestimmten Kriterien zugeordnet sind. Die Position der einzelnen Binärstellen hat dabei aber keine Bedeutung dafür, in welchem Maße das jeweilige Kriterium einen zu bestimmenden Priorisierungswert beeinflusst. Der so gewonnene mehrstellige binäre Indexwert kann als Adresswert zur Adressierung einer Tabelle dienen, in welcher zu allen möglichen Bit-Kombinationen des Indexwerts ein Priorisierungswert abgespeichert ist. Über den Indexwert, welcher nachfolgend auch als Tabellenindex bezeichnet ist, kann auf diese Weise ein Priorisierungswert gewonnen werden, welcher nachfolgend auch als Tabellen-Priorisierungswert bezeichnet ist.

In anderer vorteilhafter Ausführung kann vorgesehen sein, dass ein Priorisierungswert durch gewichtete Kombination von Werten von Zielparametern oder Kombinationen von Zielparametern oder daraus abgeleiteten Werten gewonnen wird. Ein auf diese Art gewonnener Priorisierungswert sei nachfolgend auch als gewichteter Priorisierungswert bezeichnet.

Für die Gewinnung eines gewichteten Priorisierungswerts können insbesondere Zielparameter herangezogen werden, welche auf einer eindimensionalen Skala eine Mehrzahl unterschiedlicher Werte einnehmen können und dabei in vorzugsweise monotonem Zusammenhang die Qualität einer digitalen Auswertung eines durch den Sensor aufgenommenen Bildes beeinflussen. Die Werte für die Zielparameter können dabei auf wenige diskrete Werte entsprechend einer Skalenunterteilung in einige wenige Bereiche gegeben sein.

Beispielsweise kann in vorteilhafter Ausführung die Sichtqualität in Richtung eines Zielobjekts in mehrere Qualitätsstufen, welchen jeweils ein diskreter Zahlenwert zugeordnet ist, unterteilt sein, wobei mit monotonem Verlauf eine bessere Sicht zu einem höheren Priorisierungswert führt als eine schlechtere Sicht. Die Zielentfernung kann gleichfalls als ein Zielparameter einem solchen Bewertungskriterium unterworfen werden, indem eine geringe Zielentfernung eine zuverlässigere Aussage aus der automatischen Bildauswertung erwarten läßt als eine größere Zielentfernung und deshalb eine geringere Zielentfernung zu einem höheren Priorisierungswert führt als eine große Entfernung. Insbesondere bei Schiffen als maritimen Zielobjekten spielt für die automatische Auswertbarkeit eines durch den Bildsensor aufgenommenen Bildes der Aspektwinkel als Winkel zwischen der Sichtlinie und der Längsrichtung des Schiffes eine bedeutende Rolle, wobei bei einem Aspektwinkel von 90° eine höhere Zuverlässigkeit einer Zielklassifikation erreichbar ist als bei einem Aspektwinkel von 0° oder 180°. Ein weiteres Beispiel für ein gewichtetes Kriterium bei der Gewinnung eines gewichteten Priorisierungswerts kann bei einem wiederholt auftretenden Zielobjekt die Zeit zwischen dem aktuellen Auftreten und der letzten Klassifizierung dieses Zielobjekts in der automatischen Bildauswertung herangezogen werden, wobei ein längerer Zeitabstand zu einem höheren gesamten Priorisierungswert führt als ein kurzer Zeitabstand. Schließlich kann als weiteres Beispiel auch der Zeitaufwand für eine Neuausrichtung des Bildsensors auf ein Zielobjekt gegenüber einer vorangehenden Ausrichtung herangezogen werden, wobei als Maß eine Winkeldifferenz in Azimut und/oder Elevation dienen kann. Da eine solche Neuausrichtung durch motorisches Schwenken des Bildsensors durchaus mehrere Sekunden in Anspruch nehmen kann, kann es u. U. günstiger sein, ein Ziel mit im übrigen niedrigerem Priorisierungswert aber geringerem Differenzwinkel einem Zielobjekt mit übrigen höherem Priorisierungswert aber größerem Differenzwinkel vorzuziehen.

Bei der Gewinnung des gewichteten Priorisierungswerts kann auch vorgesehen sein, dass bei einem oder mehreren Kriterien bzw. Zielparametern der Betrag des Teilbetrags zum gesamten gewichteten Priorisierungswert mit sinkender Zuverlässigkeit der Bildauswertung monoton steigt, wobei ein solcher Beitrag zum gesamten Priorisierungswert dann als den gesamten Priorisierungswert mindernd eingeht, beispielsweise durch ein negatives Vorzeichen bei einer Summenbildung oder als Nenner oder Teil eines Nenners bei einer Verhältnisbildung.

Im Allgemeinen kann die Sensorzuweisung als ein Optimierungsproblem aufgefasst werden, bei dem der zu erwartende Informationsgewinn über alle Ziele maximiert wird. Der zu erwartende Informationsgewinn bei einem einzelnen Ziel ist eine Funktion von der Fähigkeit des Sensors in einer Zuweisung das Ziel zu erkennen, dem Aufwand eine Zuweisung durchzuführen und der durch das Ziel zu erwartenden Bedrohung, was beispielhaft durch die gewichteten Priorisierungswerte beschrieben ist.

In besonders vorteilhafter einfacher Ausführungsform kann für die Gewinnung eines Priorisierungswerts eine Kombination aus einem Tabellen-Priorisierungswert und einem gewichteten Priorisierungswert herangezogen werden. Die gespeicherten Zielobjekte, zu welchen fortlaufend neue hinzukommen können, werden anhand der ihnen zugewiesenen Priorisierungswerte in eine Rangfolge unterteilt, wobei ohne Beschränkung der Allgemeinheit im folgenden davon ausgegangen sei, dass ein höherer Priorisierungswert einen besseren Rang, d. h. eine höhere Priorität in der Rangfolge der sukzessiven Abarbeitung der Zielobjekte durch den Bildsensor bedeutet.

Eine Steuereinrichtung steuert die Ausrichtung des Bildsensors auf die jeweiligen Zielobjekte in der Weise, dass die Zielobjekte in der Reihenfolge der aus den Priorisierungswerten erzeugten Rangfolge abgearbeitet werden. Ein dermaßen durch den Bildsensor erfaßtes Zielobjekt wird danach aus der Liste -gelöscht, kann aber durch erneute Detektion wieder als durch den Bildsensor zu bearbeitendes Ziel vorgegeben und erneut in der Bewertungseinrichtung bewertet werden.

Ein durch den Bildsensor zu einem Zielobjekt erzeugtes digitales Bild wird einer automatischen digitalen Bildauswertung unterzogen. Aus der automatischen Bildauswertung kann ein oder mehrere weitere Zielparameter extrahiert werden. Insbesondere kann ein solcher weiterer Zielparameter eine von mehreren vordefinierten Zielklassen darstellen. Ein anderer weiterer Zielparameter kann beispielsweise eine Information über Sichtverhältnisse in einer bestimmten Raumrichtung bilden.

In vorteilhafter Weiterbildung können die bei der automatischen Bildauswertung gewonnenen weiteren Zielparameter zusätzlich zu den in der Sensoreinrichtung ermittelten ersten Zielparametern den jeweiligen Zielobjekten zugeordnet und gespeichert werden, wenn diese Zielobjekte zeitlich nacheinander mehrfach einer Bewertung und einer Bildauswertung unterzogen werden sollen. Aus der Bildauswertung gewonnene, richtungsabhängige Zielparameter, wie insbesondere Sichtverhältnisse, Blendverhältnisse durch Sonnenstand usw. können auch für andere Ziele in gleichen oder benachbarten Raumrichtungen bei der Bewertung als Kriterien mit berücksichtigt werden.

In vorteilhafter Weiterbildung kann vorgesehen sein, dass die aus der Bildauswertung gewonnene Informationen, insbesondere die dabei extrahierten weiteren Zielparameter dazu benutzt werden, einzelne Kriterien in der Bewertungseinrichtung adaptiv nachzuführen und hierdurch die Qualität der Zusatzinformation aus der Bildauswertung für die Gesamtbeurteilung der Lage weiter zu verbessern. Der zu erwartende Beitrag eines einzelnen Zielobjekts zu dem gesamten Informationsgewinn durch Sensorbeobachtungen kann hierdurch quasi erlernt und die Funktion von der Fähigkeit des Sensors, in einer Zuweisung das Ziel zu erkennen, kann so approximiert werden.

Die Erfindung ist nachfolgend anhand vorteilhafter Ausführungsbeispiele weiter veranschaulicht. Dabei zeigen:

Fig. 1    ein Schema eines erfindungsgemäßen Erfassungssystems,

Fig. 2    einen schematischen Aufbau einer Bewertungseinrichtung,

Fig. 3    ein Ziel unter verschiedenen Aspektwinkeln,

Fig. 4    eine Bereichsunterteilung.

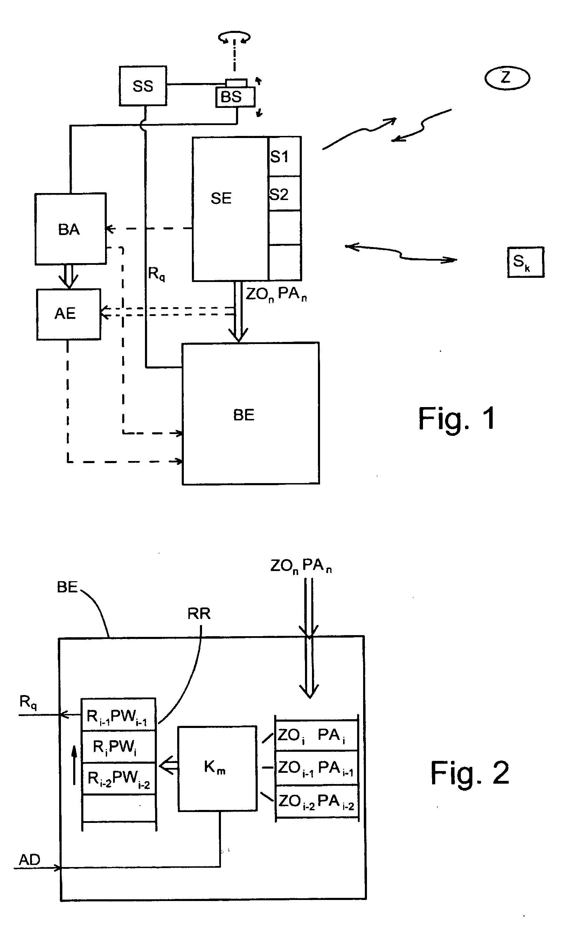

Fig. 1 zeigt in schematischer Darstellung wesentliche Komponenten eines erfindungsgemäßen Systems.

Eine Sensoreinrichtung SE enthalte einen oder mehrere Sensoren S1, S2, ..., welche zur Detektion von Zielobjekten in einem Erfassungsbereich ausgelegt sind. Ein Zielobjekt ist in Fig. 1 mit Z bezeichnet. Die Sensoren S1, S2 können beispielsweise aktive Radarsensoren oder Lasersensoren sein oder auch durch rein passive Sensoren gebildet sein, welche lediglich elektromagnetische Strahlung, welche aktiv von dem Ziel Z ausgesandt wird, erfassen. Mit SK ist ein weiterer Sensor angedeutet, welcher von der Sensoreinrichtung SE entfernt angeordnet sein kann und über eine Datenverbindung mit der Sensoreinrichtung SE oder der Bewertungseinrichtung verbunden sei.

Die Sensoreinrichtung SE detektiert Zielobjekte in ihrem Erfassungsbereich und generiert hierzu Zielmeldungen und bestimmt den jeweiligen Zielobjekten zugeordnete erste Zielparameter. Zu einem Zielobjekt können hierbei mehrere Zielparameter ermittelt werden.

Die Sensoreinrichtung SE gibt Meldungen zu Zielobjekten zusammen mit einer Angabe über die Raumrichtung, in welcher sich das Ziel befindet, sowie mit den ermittelten ersten Zielparametern an eine Bewertungseinrichtung BE. Die übermittelten Raumrichtungsinformationen und ersten Zielparameter $PA_n$ sind den einzelnen Zielobjekten $ZO_n$ individuell zugeordnet. Jedem Zielobjekt können mehrere erste Zielparameter zugeordnet sein.

Die Bewertungseinrichtung BE, welche schematisch in Fig. 2 detaillierter dargestellt ist, führt eine Zwischenspeicherung der übermittelten Information unter Beibehaltung der Zuordnung zu einem bestimmten Zielobjekt durch und bewertet jedes Zielobjekt $ZO_i$, $ZO_{i-1}$, $ZO_{i-2}$, ... anhand der dazu gespeicherten Zielparameter $PA_i$, $PA_{i-1}$, $PA_{i-2}$, ... Die Gesamtheit der Bewertungskriterien ist pauschal mit $K_m$ als eine Bewertungsstufe in der Bewertungseinrichtung angedeutet.

Die Bewertungsstufe weist jedem Zielobjekt $ZO_n$ einen Priorisierungswert $PW_n$ zu, anhand dessen in einem Rangfolgeregister RR Zielinformationen zu den einzelnen individuellen Zielobjekten in einer durch die jeweiligen Priorisierungswerte $PW_n$ bestimmten Rangfolge abgelegt werden an deren erster Stelle das jeweils priori-ätshöchste Zielobjekt steht. Die Rangfolge ist nicht statisch und kann sich während der sukzessiven Abarbeitung ändern, insbesondere durch neu detektierte Zielobjekte. Anstelle der Rangfolge kann auch jeweils nur ein prioritätshöchstes Zielobjekt bestimmt werden. Die Bildung einer Rangfolge hat den Vorteil, dass lediglich neu zu bewertende Zielobjekte im Prioritätsrang neu eingestuft werden müssen. Die Richtungsinformationen Rq des jeweils prioritätshöchsten Zielobjekts an eine Sensorsteuerung SS gegeben, welche einen mechanisch und/oder elektronisch richtungsveränderlich ausrichtbaren zweiten Sensor nach Maßgabe der von der Bewertungseinheit übermittelten Richtungsinformation in Richtung dieses Zielobjekts ausrichtet, d. h. den zweiten Sensor auf dieses Zielobjekt einweist. Das hierbei durch den zweiten Sensor erfasste und ausgewertete Zielobjekt kann erneut bewertet und in die Rangfolge eingestellt werden. Als zweiter Sensor sei im folgenden in bevorzugter Ausführung ein elektro-optischer Bildsensor angenommen.

Nach Ausrichtung des Bildsensors in die gewünschte Raumrichtung nimmt der Bildsensor ein digitales Bild auf und übermittelt dieses an eine Bildauswerteeinrichtung BA, welche in an sich bekannter Weise aus dem Bild Informationen über ein darin enthaltenes Zielobjekt extrahiert, beispielsweise ein solches Zielobjekt mit einer gewissen Wahrscheinlichkeit einer von mehreren Zielklassen zuordnet. Die bei der Bildauswertung in der Bildauswerteeinrichtung BA einem Zielobjekt $ZO_n$ zugeordnete Zielklasse $ZK_n$ wird einer Auswerteeinrichtung AE zugeleitet, welche die Zielklasse gegebenenfalls mit weiteren Informationen, beispielsweise den von der Sensoreinrichtung SE abgegebenen Information verknüpft.

In der Bildauswerteeinrichtung BA können neben der Zuordnung einer Klasse auch andere Zielparameter $PZ_n$ extrahiert und der Bewertungseinrichtung BE zugeführt werden, um bei erneuter Bearbeitung desselben Zielobjekts einen solchen weiteren Zielparameter mit zu berücksichtigen.

In vorteilhafter Weiterbildung kann vorgesehen sein, dass die Auswerteeinrichtung AE die zugeordnete Zielklasse und/oder die Gesamtlage dahingehend auswertet, dass zur weiteren Verbesserung der Gesamtlageerkennung die in der Bewertungseinheit BE abgelegten Kriterien modifiziert werden können. In Fig. 1 ist dies durch einen Pfad von der Auswerteeinrichtung AE zur Bewertungseinrichtung BE und über diesen übermittelte Adaptionsdaten AD angedeutet.

Die Neuausrichtung des Bildsensors einschließlich der Aufnahme eines digitalen Bildes von dem Ziel dauert typischerweise mehrere Sekunden. Bei sukzessivem Abarbeiten von Zielen in der Reihenfolge der Detektion durch die Sensoreinrichtung bestünde daher die Gefahr, dass in dem Sinne wichtige Ziele, dass eine schnelle Reaktion erforderlich ist, zu spät durch den Bildsensor überprüft werden. Die Bewertung und Zuordnung eines Priorisierungswerts und die Abarbeitung in der Reihenfolge der Rangfolge der Priorisierungswerte bietet damit eine automatisierte und schnelle Abarbeitung unter reproduzierbarer Bevorzugung von Zielen mit objektivierter Bedeutung für die Gesamtlage.

Nachfolgend sei eine Vorgehensweise bei der Erstellung eines Priorisierungswertes beschrieben, bei welcher zwei Ansätze zur Generierung eines Priorisierungswerts kombiniert werden.

Als Gründe für eine Einweisung (Ausrichtung) des Bildsensors auf ein durch die Sensoreinrichtung detektiertes Zielobjekt und die digitale Auswertung eines von dem Zielobjekt im Bildsensor aufgenommenen digitalen Bildes können insbesondere in Betracht kommen:

- ein detektiertes Zielobjekt wurde bisher noch nicht einer Erfassung durch den Bildsensor und einer automatischen Bildauswertung unterzogen, so dass noch keine bei der Bildauswertung extrahierten weiteren Zielparameter vorliegen

- ein Zielobjekt, das über ein Kommunikationsmittel gemeldet wurde, von dessen Originator aber nicht identifiziert oder klassifiziert werden konnte, kommt in den Erfassungsbereich des elektro-optischen Sensors

- ein bereits detektiertes Zielobjekt wurde als (potentiell) besonders bedrohlich eingestuft, weil z.B.

  - das Zielobjekt sich mit hoher Geschwindigkeit auf ein Schutzobjekt zu bewegt
  - das Zielobjekt in eine besondere Schutzzone eingedrungen ist
  - das Zielobjekt eine elektromagnetische Emission ausstrahlt, die auf Grund ihrer Charakteristik als typisch für Angriffsmittel, z.B. Flugkörper gilt (Radarsuchkopf bei Raketen, Feuerleitradar eines Kampfflugzeugs, Kriegsschiffes)
  - das Zielobjekt Ursprung einer Laser-Emission ist, z.B. einer Laser Range Finders, Laser Target Designators oder Laser Beam Riders

- ein bereits detektiertes und als nicht bedrohlich eingestuftes Zielobjekt ändert sprunghaft sein Verhalten

- ein neues Ziel wurde von einem anderen Sensor detektiert und soll mit diesem Sensor ebenfalls erfasst werden, um die Lageinformation anhand der Bildauswertung zu vervollständigen

- für eine Aktion gegen ein zuvor noch nicht klassifiziertes Zielobjekt soll kurzfristig mit Hilfe der automatischen Bildauswertung die Art der Maßnahme gegen das Ziel optimiert werden.

Ein erster Ansatz für eine Bewertung unter Generierung eines Priorisierungswerts ist, jeden der genannten Punkte als ein Bewertungskriterium $K_m$ zu verwenden, bei dessen Erfüllung durch ein Zielobjekt $ZO_n$ ein zu diesem Kriterium abgespeicherter Teilwert $TW_m$ als ein Summand einen Beitrag zu einem durch Summation über die Beiträge

aller M Kriterien $K_1$ bis $K_M$ gebildeten Priorisierungswert PS liefert. Nicht erfüllte Kriterien liefern keinen Beitrag. Erfüllen oder Nichterfüllen eines Kriteriums Km kann durch einen binären Erfüllungswert $E_m$, der z.B. die Werte 0 (Null) oder 1 annehmen kann, in der Bewertungseinrichtung abgebildet werden. Der Priorisierungswert PS ergibt sich dann als Summe

$$PS = \sum_{m=1}^{M} \left( Erfüllungswert_m * TW_m \right)$$

Es zeigt sich, dass häufig verschiedene Kombinationen von erfüllten und nicht erfüllten Kriterien besondere Auswirkungen auf die Bedeutung eines Zielobjekts für die Lagebeurteilung haben, was durch eine solche einfache Generierung eines Priorisierungswerts als Summe nicht hinreichend berücksichtigt werden kann.

In einer vorteilhaften Weiterbildung wird daher nicht jedes Bewertungskriterium einzeln als Summand einer Summenbildung eingesetzt, sondern aus den Erfüllungswerten $TW_m$ wird ein mehrstelliges Binärwort gebildet, wobei jedem Kriterium eine feste Binärstelle innerhalb des Binärworts zugewiesen ist, in welche der zu diesem Kriterium ermittelte Erfüllungswert eingetragen wird. Ein solches Binärwort wird dann als Schlüsselindex zur Adressierung einer Zelle innerhalb einer Tabelle mit abgespeicherten Priorisierungswerten benutzt und der in der adressierten Tabellenzelle abgespeicherte Priorisierungswert wird ausgelesen und dem jeweiligen Zielobjekt zugeordnet. Das mehrstellige Binärwort kann (mit m als Nummer des jeweiligen Kriteriums) auch als binärer Zahlenwert ausgedrückt werden in der Form

$$Index = \sum_{m=1}^{M} \left( Erfüllungswert_m * 2^m \right)$$

Der Index hat aber nicht die Funktion einer als Zahlenwert weiter bewerteten Größe, sondern bildet lediglich eine Tabellenadresse.

Der an der jeweils zugehörigen Tabellenadresse abgespeicherte Priorisierungswert bildet einen individuellen Wert für eine individuelle Kombination von erfüllten und nicht erfüllten Kriterien. Bei M Kriterien sind dann $2^M$ individuelle Priorisierungswerte als zur Bildung einer Rangfolge geeignete Zahlenwerte abgespeichert, von welchen durchaus einige gleich groß sein können. Hierdurch können beliebige Wechselwirkungen zwischen einzelnen Kriterien vorteilhaft in den gespeicherten Priorisierungswerten berücksichtigt werden. Es besteht auch die Möglichkeit, einem Kriterium, welches nicht durch einen binären Erfüllungswert sinnvoll darstellbar ist, mehr als eine Binärstelle zuzuordnen, so dass ein Kriterium auch als z.B. zweistellige Binärkombination vier unterschiedliche Werte annehmen und dies bei der Generierung des Priorisierungswerts berücksichtigt werden kann.

Auch bei der zuerst genannten Ausführungsform mit der Summenbildung aus mit einem Erfüllungswert gewichteten Teilwerten über alle Kriterien kann anstelle eines zweiwertigen Erfüllungswerts 0/1 auch eine stärkere Differenzierung des Erfüllungswerts mit mehr als zwei Werten vorgesehen sein.

Es kann auch vorgesehen sein, für einen Teil der Bewertungskriterien eine gewichtete Summenbildung zur Gewinnung eines ersten Priorisierungswerts durchzuführen und für einen anderen Teil der Bewertungskriterien einen zweiten Priorisierungswerts aus der Tabellenadressierung mit einem mehrstelligen Binärwort zu bestimmen und die beiden Priorisierungswerte zu verknüpfen, beispielsweise zu summieren.

Insbesondere bei Zielparametern und Kriterien, bei welchen ein größerer Wert einen geringeren Priorisierungswert impliziert, kann es anschaulich sein, Beiträge solcher Kriterien als Teile eines bei der Generierung des Priorisierungswerts negativ zu Buche schlagenden Kostenmaßes zu betrachten.

Ein solches Kostenmaß als eine Teilgröße eines Priorisierungswerts kann beispielsweise den Zeitaufwand für die Neuausrichtung des Bildsensors und evtl. auch die Zeit für die Bildaufnahme durch den Sensor berücksichtigen. Je größer der Schwenkwinkel für eine Neuausrichtung des Bildsensors um so höher fällt der Beitrag des Kriteriums des Ausrichtungsaufwands zu einem solchen Kostenmaß aus, welches seinerseits den Priorisierungswert mindert, so dass ein sonst gleichwertiges Zielobjekt mit geringerem Ausrichtungsaufwand bevorzugt wird. Der den Priorisierungswert mindernde Beitrag dieses Kriteriums ist sinnvollerweise eine mit dem Ausrichtungsaufwand, beispielsweise ausgedrückt als Betrag des erforderlichen Schwenkwinkels, monoton steigende Funktion. Ein Kostenmaß für die Neuausrichtung des Bildsensors auf ein Zielobjekt kann beispielsweise ausgedrückt werden als ein Zeitaufwand-Kostenmaß

$$L_{Zeitaufwand} = f \left( T_{Ausricht} + T_{Messung} \right)$$

in das Gesamtkostenmaß ein.

Ein weiteres Kostenmaß kann sich bei der möglichen Wiederholung einer Messung, also wenn ein Zielobjekt bereits einmal mit diesem Bildsensor gemessen wurde, aus der Zeitdifferenz zur letzten Messung ergeben, wobei eine Wiederholungsmessung nach einem größeren Zeitabstand gegenüber einer Wiederholungsmessung nach einem kürzeren Zeitabstand typischerweise zu bevorzugen ist. Der Beitrag dieses Kriteriums bildet dann sinnvollerweise eine mit dem Zeitabstand monoton fallende, z.B. linear oder exponentiell fallende Funktion zwischen einem Maximalwert und Null und kann als Wiederholungskostenmaß ausgedrückt werden als Funktion des Zeitabstands zu letzten Messung.

$$L_{Wiederholung} = f \left( Zeitabstand \right)$$

Weitere Beispiele für als ein Kostenmaß bildende Kriterien können Parameter und Faktoren darstellen, welche für die Qualität der bildlichen Erfassung des Zielobjekts und der Zielobjekt-Klassifizierung bei der digitalen Bildauswertung und damit für die Erfolgsaussicht einer Bilderfassung und Bildauswertung eine maßgebliche Rolle spielen, wie insbesondere

- Entfernung des Bildsensors vom Zielobjekt
- Lichtverhältnisse; eine geringe Helligkeit
- Winkelabstand der Raumrichtung des Zielobjekts vom aktuellen Sonnenstand
- Sichtverhältnisse (wie z.B. Regen, Nebel)
- Bewegung des Ziels (Geschwindigkeit, Beschleunigung)

Die vorstehende Aufzählung ist nicht als vollständig oder als zwingend anzusehen. Je nach eingesetztem Bildsensor kann die Liste sinnvollerweise heranzuziehender Kriterien variieren.

Jedes dieser Kriterien wird für sich als einzelner Wert gewichtet und geht als Einzel-Kostenmaß in das Gesamtkostenmaß ein, wobei die Werte günstigerweise auf wenige diskrete Werte beschränkt sind.

Vorteilhafte Ausführungen zur Diskretisierung können Vergleiche mit vorgebbaren Schwellwerten (z.B. für die Ausgabe eines zur Unterstützung genutzten Helligkeitssensors oder Nebelsensors) sein, wobei die mehreren Schwellwerte aneinander angrenzende Wertebereiche begrenzen. Ein Überschreiten eines der Grenzwerte erzeugt den zugeordneten diskreten Wert.

Die Bewertung aller Erfolgsaussichten wird mit einem Kostenmaß für einen möglichen Misserfolg berücksichtigt. Dieses Kostenmaß kann beispielhaft mit folgender Berechnung vorteilhaft realisiert werden:

$$L_{Misserfolg} = \sum_{m=1}^{M} \left( Gewichtung_m * Diskretisierungswert_m \right)$$

wobei gilt:

Die Gewichtung$_m$ bezeichnet das einzelne Kostenmaß eines Kriteriums 'm', der Diskretisierungswert$_m$ bezeichnet einen diskreten Wert (mit Wertebereich $\mathbb{N}_0$ = {0, 1, 2, 3 ...}), der um so größer wird, je unvorteilhafter dieses Kriterium 'm' erfüllt ist.

Beispiel für Diskretisierungswerte von Nebel bezogen auf einen beliebigen optischen Sensor:

0 : klare Sicht
1 : geringe Einschränkung
2 : leichter Nebel
3 : mittlerer Nebel
4 : schlechte Sicht

5 : keine Sicht (Sensor nicht nutzbar)

d) Aspektwinkel des Ziels

Als weiteres Kostenmaß kann eingehen, dass möglicherweise trotz einer erfolgreichen Einweisung die dabei gewonnenen Bildinformation auf Grund der ungünstigen Lageposition des Ziels eine weitere automatische Klassifikation erschweren oder gar nicht sinnvoll ermöglichen.

Beispielhaft sei dafür der Aspektwinkel, unter welchem ein Zielobjekt erfasst wird, genannt:

Wird beispielsweise ein Schiff frontal von vorne erfasst, ähnelt dieses Bild des Schiffes vielen anderen Schiffstypen, so dass eine genaue Klassifikation nicht möglich ist.

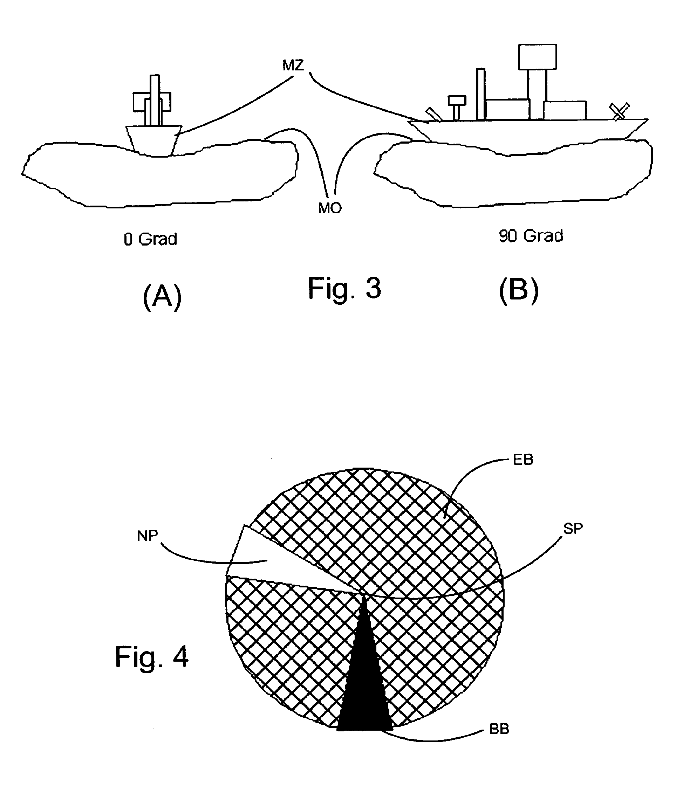

Ändert das Ziel aber seine Lage (Aspektwinkel) relativ zur Sichtlinie zwischen Bildsensor und Schiff, so dass die Aufbauten des Schiffes voneinander räumlich getrennt erkannt werden können, so kann eine genauere Klassifikation auch automatisiert erfolgen. In Fig. 3 sind eine Situation mit einem Aspektwinkel von 0° (Fig. 3A) und eine Situation mit einem Aspektwinkel von 90° (Fig. 3B) dargestellt, aus welchen sich der Einfluss des Aspektwinkels auf die Klassifizierung eines solchen Schiffsziels MZ auf einer Meeresoberfläche MO augenfällig ergibt.

Zur Berücksichtigung des Aspektwinkel wird folgende Definition getroffen:

- bewegt sich ein Ziel radial vom Sensor weg, so ist der Aspektwinkel null
- ist die Sichtverbindung vom Sensor zum Ziel senkrecht auf Steuerbord, so ist der Aspektwinkel 90 Grad
- bewegt sich ein Ziel radial auf den Sensor zu, ist der Aspektwinkel 180 Grad.
- ist die Sichtverbindung vom Sensor zum Ziel senkrecht auf Backbord, so ist der Aspektwinkel 270 Grad

Es kann daher ein Kostenmaß definiert werden, das um so größer wird, je ungünstiger der Aspektwinkels $\alpha$ ist.

Eine vorteilhafte Ausführung ist ein Kostenmaß, das wie folgt definiert werden kann:

$$\text{LAspekt} = \text{LAspektMax} * |\cos \alpha|$$

wobei LAspektMax das maximale Kostenwert unter ungünstigstem Winkel direkt von vorne bzw. hinten bedeutet (bei Aspektwinkel null bzw. 180 Grad) $\cos \alpha$ die Winkelfunktion Kosinus für den Aspektwinkel bedeutet |x| den Betrag einer Funktion oder Wertes bedeutet.

Der Vorteil der Berechnung mit der o.a. Formel ist, dass für die Aspektwinkel von 0 bzw. 180 Grad das resultierende Kostenmaß das Maximum ergibt, für die optimalen Aspektwinkel von 90 bzw. 270 die Funktion den Wert null ergibt, also fällt in diesem Fall kein Beitrag zum Gesamtkostenmaß an.

Der Aspektwinkel, der üblicherweise nicht exakt bekannt ist, kann aus der Richtung des Tracks bezogen auf die Sensorposition abgeleitet werden. Für Ziele mit geringer bis mittlerer Manövrierfähigkeit ist dies ausreichend. Ansonsten sind entsprechende Glättungsfunktionen, wie z.B. ein $\alpha$-ß-Filter günstig.

Anhand aller beitragenden Faktoren, die eine Einweisung ungünstig erscheinen lassen, wird anschließend ein Gesamtkostenmaß berechnet:

$$L_{\text{Gesamt}} = L_{\text{Zeitaufwand}} + L_{\text{Wiederholung}} + L_{\text{Misserfolg}} + L_{\text{Aspekt}}$$

Für jedes Ziel, das nicht anhand einer Vorauswahl mit absoluten Kriterien bereits für eine Einweisung ausscheidet, wird ein Priorisierungswert in der Bewertungseinrichtung bestimmt, wofür die genannten Varianten als Beispiele für mögliche Vorgehensweisen ohne Beschränkung der Allgemeinheit zu verstehen sind. Werden aus Teilen der Bewertungskriterien verschiedene Beiträge zu einem Priorisierungswert als Teil-Priorisierungswerte getrennt bestimmt, so werden die Teil-Priorisierungswerte abschließend miteinander verknüpft, wobei sowohl eine additive oder subtraktive als auch eine Verhältnisbildung oder Kombinationen hiervon möglich sind. Beispielsweise kann aus einem Bewertungskriteriensatz, wie er bei der Beschreibung der Ermittlung eines Priorisierungswerts beispielhaft genannt ist, ein als Nutzwert bezeichneter erster Priorisierungswert bestimmt werden und mit dem beispielhaft beschriebenen Gesamtkostenmaß als weiterem Priorisierungswert das Verhältnis

$$V = \text{Nutzwert} / L_{\text{Gesamt}}$$

ermittelt und als für die Rangfolgenbestimmung zu verwendender Priorisierungswert des Zielobjekts herangezogen werden. Je größer das Verhältnis ausfällt, desto geeigneter ist das Ziel, das als nächstes als Ziel dem Sensor angewiesen werden soll. Es wird also das Ziel mit dem Maximum als optimale Paarung von Sensor zu Ziel angesehen und zugewiesen.

Es ist vorteilhaft solche Ziele, die prinzipiell nicht für ein Einweisung des Sensors in Betracht kommen, bereits vor der Bewertung von der weiteren Verarbeitung auszuschließen.

Dazu gehören insbesondere

- Ziele in einem Blindbereich des Sensors
  Bereiche, in denen der Sensor, z.B. wegen konstruktiver Maßnahmen oder auf Grund des Standorts keine Sicht hat (Beispiel Schiffsaufbauten)

- Ziele in einer No-Pointing-Zone
  vorgegebene Bereiche, die auf Grund operationeller Vorgaben ausgeschlossen sein sollen

- Ziele, die sich außerhalb der typischen Sichtweite (Reichweite) des Sensors befinden

- Ziele, die aus optischen Gründen nicht mehr sichtbar sind, also außerhalb der sog. Line-of-sight ("hinter dem optischen Horizont")

Fig. 4 zeigt vereinfacht eine Draufsicht auf ein Überwachungsgebiet eines erfindungsgemäßen Systems, wobei mit EB ein für die Erfassung mit dem Bildsensor durch eine Maximalentfernung begrenzter Erfassungsbereich , mit BB ein durch eine Abschattung durch den Bildsensor nicht erfassbarer Bereich und mit NP eine Zone, aus welcher Zielmeldungen nicht weiterverarbeitet werden, bezeichnet sind. Die Position des Bildsensors ist mit SP bezeichnet.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere kann zusätzlich zu der beschrieben automatisierten Vorgehensweise vorgesehen sein, dass eine gezielt manuell einleitbare Vermessung eines Zielobjekts möglich ist und auch Vorrang haben kann vor der automatischen Abwicklung.

**Patentansprüche**

1. Verfahren zur Erfassung von Zielobjekten (z) mittels einer wenigstens einen ersten Sensor (S1) enthaltenden ersten Sensoreinrichtung (SE) und einer wenigstens einen zweiten Sensor (BS) enthaltenden zweiten Sensoreinrichtung, wobei der zweite Sensor (BS) mittels einer Steuereinrichtung in unterschiedliche Raumrichtungen ausrichtbar ist, mit folgenden Verfahrensschritten

   a) mittels der ersten Sensoreinrichtung (SE) werden Zielobjekte ($ZO_n$) detektiert,

   b) für die Zielobjekte ($ZO_n$) wird jeweils eine Information über die Raumrichtung ($R_i$) relativ zu der Position des zweiten Sensors (BS) und wenigstens ein erster Zielparameter ($PA_n$) bestimmt,

   c) zumindest ein Teil der Zielobjekte ($ZO_n$) wird mit dem wenigsten einen ersten Zielparameter ($PA_n$) und der Information über die Raumrichtung ($R_i$) des Zielobjekts ($ZO_n$) relativ zu der Position des zweiten Sensors (BS) gespeichert,

   d) die gespeicherten Zielobjekte ($ZO_n$) werden anhand von Zielparametern ($PA_n$) und dazu gespeicherter Bewertungskriterien ($K_m$) bewertet und dabei wird ein prioritätshöchstes Zielobjekt bestimmt, wobei der Zeitaufwand für die Neuausrichtung des zweiten Sensors auf das Zielobjekt ($ZO_n$) ermittelt und als Kriterium bei der Bewertung berücksichtigt wird,

   e) der zweite Sensor (BS) wird auf das in Schritt d) bestimmte prioritätshöchste Zielobjekt ausgerichtet und ein Sensorsignal des zweiten Sensors (BS) zu dem Zielobjekt wird gewonnen,

   f) durch automatische Auswertung (AE) des zu einem Zielobjekt im zweiten Sensor (BS) gewonnenen Sensorsignals wird wenigstens ein weiterer Zielparameter extrahiert,

   g) die Schritte d) bis f) werden wiederholt durchgeführt, gegebenenfalls unter Hinzunahme von nach a) bis c) neu hinzukommenden Zielobjekten.

2.  Verfahren nach Anspruch 1, **dadurch gekennzeichnet, dass** der wenigstens eine weitere Zielparameter zur Einordnung des Zielobjekts in eine von mehreren Klassen einer Klassifikation herangezogen wird.

3.  Verfahren nach Anspruch 1 oder 2, **dadurch gekennzeichnet, dass** als ein erster Zielparameter ($PA_n$) die Bewegungsrichtung des Zielobjekts ($ZO_n$) relativ zum Bildsensor (BS) und/oder die Geschwindigkeit des Ziels und/oder die Entfernung des Ziels bestimmt wird.

4.  Verfahren nach einem der Ansprüche 1 bis 3, **dadurch gekennzeichnet, dass** als ein erster Zielparameter ($PA_n$) die Emission von Radar- oder Laserstrahlung durch das Zielobjekt bestimmt wird.

5.  Verfahren nach Anspruch 4, **dadurch gekennzeichnet, dass** als ein erster Zielparameter ($PA_n$) eine erkennbare Signatur einer von dem Zielobjekt emittierten Radar- oder Laserstrahlung bestimmt wird.

6.  Verfahren nach einem der Ansprüche 1 bis 5, **dadurch gekennzeichnet, dass** als ein erster Zielparameter ($PA_n$) die Zielposition eines Zielobjekts bestimmt wird.

7.  Verfahren nach Anspruch 6, **dadurch gekennzeichnet, dass** wenigstens ein Winkelbereich der Ausrichtung des zweiten Sensors (BS) vordefiniert ist und als ein Bewertungskriterium überprüft wird, ob die Zielrichtung in diesen Winkelbereich fällt.

8.  Verfahren nach Anspruch 6 oder 7, **dadurch gekennzeichnet, dass** wenigstens ein Teilgebiet innerhalb des Erfassungsbereichs des zweiten Sensors (BS) vordefiniert ist und als ein Bewertungskriterium überprüft wird, ob die Zielposition in diesem Teilgebiet liegt.

9.  Verfahren nach einem der Ansprüche 1 bis 8, **dadurch gekennzeichnet, dass** ein aus der Auswertung des Sensorsignals des zweiten Sensors zu einem Zielobjekt extrahierter weiterer Zielparameter als ein Kriterium bei der Bewertung berücksichtigt wird.

10. Verfahren nach einem der Ansprüche 1 bis 9, **dadurch gekennzeichnet, dass** wenigstens ein Bewertungskriterium unter Berücksichtigung der Bildauswertung (AE) adaptiv verändert wird.

11. Verfahren nach einem der Ansprüche 1 bis 10, **dadurch gekennzeichnet, dass** bei der Anwendung der gespeicherten Bewertungskriterien ($K_m$) zu den mehreren Zielobjekten ($ZO_n$) jeweils ein Priorisierungswert erzeugt wird und das Zielobjekt mit dem größten Priorisierungswert als prioritätshöchstes Zielobjekt ausgewählt wird.

12. Verfahren nach einem der Ansprüche 1 bis 11, **dadurch gekennzeichnet, dass** zumindest in einem der Bewertungskriterien ($K_m$) ein erster Zielparameter ($PA_n$) mit einem Schwellwert verglichen und ein Binärwert erzeugt wird.

13. Verfahren nach einem der Ansprüche 1 bis 12, **dadurch gekennzeichnet, dass** in zumindest einem der Bewertungskriterien ($K_m$) ein mehrstelliger Binärwert erzeugt wird.

14. Verfahren nach Anspruch 12 oder 13, **dadurch gekennzeichnet, dass** mehrere nach verschiedenen Bewertungskriterien ($K_m$) erzeugte Binärwerte zu einem Tabellenindex zusammengefasst werden und dass mit diesem Tabellenindex als Adresse ein Priorisierungs-Tabellenwert aus einer Tabelle ausgelesen wird.

15. Verfahren nach einem der Ansprüche 11 bis 14, **dadurch gekennzeichnet, dass** durch Summierung gewichteter Zielparameter ($PA_n$) ein gewichteter Priorisierungswert bestimmt wird.

16. Verfahren nach Anspruch 14 und 15, **dadurch gekennzeichnet, dass** ein Priorisierungswert durch Kombination eines Priorisierungs-Tabellenwerts und einen gewichteten Priorisierungswert bestimmt wird.

17. Verfahren nach einem der Ansprüche 1 bis 16, **dadurch gekennzeichnet, dass** wenigstens ein absolutes Bewertungskriterium ($K_m$) auf einen ersten Zielparameter ($PA_n$) angewandt wird, bei dessen Nichterfüllung das Zielobjekt ($ZO_n$) von der aktuellen weiteren Bearbeitung ausgeschlossen wird.

18. Verfahren nach einem der Ansprüche 1 bis 17, **dadurch gekennzeichnet, dass** als zweiter Sensor (BS) ein bildgebender elektro-optischer Bildsensor benutzt wird.

**19.** Verfahren nach einem der Ansprüche 1 bis 18, **dadurch gekennzeichnet, dass** als zweiter Sensor (BS) ein mechanisch um wenigstens eine Schwenkachse schwenkbarer Sensor benutzt wird.

**20.** System zur Erfassung von Zielobjekten (z), insbesondere nach einem Verfahren gemäß einem der Ansprüche 1 bis 19, mit einer wenigstens, einen ersten Sensor (S1) enthaltenden ersten Sensoreinrichtung (SE), einer Bewertungseinrichtung (BE), einer Auswerteeinrichtung (AE) und einer zweiten Sensoreinrichtung mit wenigstens einem zweiten Sensor (BS), welcher mittels einer Steuereinrichtung in unterschiedliche Raumrichtungen ausrichtbar ist, wobei

- die erste Sensoreinrichtung (SE) Zielobjekte ($ZO_n$) detektiert und für diese jeweils eine Raumrichtung ($R_i$) bezüglich der Position des zweiten Sensors (BS) und wenigstens einen von mehreren ersten Zielparametern ($PA_n$) bestimmt
- die Bewertungseinrichtung (BE) anhand von Zielparametem ($PA_n$) und gespeicherten Bewertungskriterien ($K_m$) Zielobjekten bewertet und dabei ($ZO_n$) ein prioritätshöchstes Zielobjekt bestimmt, wobei in der Bewertungseinrichtung der Zeitaufwand für die Ausrichtung des zweiten Sensors (BS) auf das Zielobjekt ermittelt und als kriterium bei der Bewertung, berücksichtigt wird,
- die Steuereinrichtung den zweiten Sensor (BS) auf das zuvor bestimmte prioritätshöchste Zielobjekte ausrichtet und ein Sensorsignal des zweiten sensors zu dem Zielobjekt gewonnen wird
- die Auswerteeinrichtung (AE) aus dem Sensorsignal des zweiten Sensors wenigstens einen weiteren Zielparameter extrahiert.

**21.** System nach Anspruch 20, **dadurch gekennzeichnet, dass** der zweite Sensor (BS) auf einem Fahrzeug angeordnet ist.

**22.** System nach einem der Ansprüche 20 bis 21, **dadurch gekennzeichnet, dass** wenigstens ein erster Sensor (S1, S2) der ersten Sensoreinrichtung (SE) in fester räumlicher Zuordnung zu dem zweiten Sensor (BS) angeordnet ist.

**23.** System nach einem der Ansprüche 20 bis 22, **dadurch gekennzeichnet, dass** wenigstens ein Sensor (S1, S2) der Sensoreinrichtung (SE) ein aktiver Radar- oder Lasersensor ist.

**24.** System nach einem der Ansprüche 20 bis 23, **dadurch gekennzeichnet, dass** wenigstens ein Sensor (S1, S2) der Sensoreinrichtung (SE) ein passiver Radar- oder Laserdetektor ist.

**25.** System nach Anspruch 24, **dadurch gekennzeichnet, dass** dem passiven Sensor eine Signaturerkennungseinrichtung zugeordnet ist.

**26.** System nach einem der Ansprüche 20 bis 25, **dadurch gekennzeichnet, dass** die Bewertungseinrichtung (BE) eine binär adressierbare Tabelle mit Priorisierungs-Tabellenwerten enthält.

**27.** System nach einem der Ansprüche 20 bis 26, **dadurch gekennzeichnet, dass** wenigstens ein Bewertungskriterium ($K_m$) in der Bewertungseinrichtung (BE) adaptiv (AD) einstellbar ist.

**28.** System nach einem der Ansprüche 20 bis 27, **dadurch gekennzeichnet, dass** der zweite Sensor (BS) in Azimut und/oder Elevation bezüglich eines Sensorträgers motorisch veränderlich ausrichtbar ist.

**29.** System nach einem der Ansprüche 20 bis 27, **dadurch gekennzeichnet, dass** der zweite Sensor (BS) ein Bildsensor ist.

**30.** System nach Anspruch 29, **dadurch gekennzeichnet, dass** der Bildsensor (BS) für den sichtbaren oder den infraroten Spektralbereich ausgelegt ist.

**31.** System nach einem der Ansprüche 29 oder 30, **dadurch gekennzeichnet, dass** die Brennweite eines optischen Systems des Bildsensors (BS) veränderbar ist.

**Claims**

**1.** Method for detecting target objects (z) by means of a first sensor device (SE) including at least one first sensor (S1), and of a second sensor device including at least one second sensor (BS), in which the second sensor (BS) is alignable by means of a controller in different spatial directions, having the following method steps:

a) target objects ($ZO_n$) are detected by means of the first sensor device (SE),
b) there are respectively determined for the target objects ($ZO_n$) an information item concerning the spatial direction ($R_i$) relative to the position of the second sensor (BS), and at least one first target parameter ($PA_n$),
c) at least some of the target objects ($ZO_n$) are stored with the at least one first target parameter ($PA_n$) and the information item concerning the spatial direction ($R_i$) of the target object ($ZO_n$) relative to the position of the second sensor (BS),
d) the stored target objects ($ZO_n$) are assessed with the aid of target parameters ($PA_n$) and assessment criteria ($K_m$) stored therefor, and a highest priority target object is determined in this case, the time outlay for the realignment of the second sensor with the target object ($ZO_n$) being determined and being considered as criterion in the assessment,
e) the second sensor (BS) is aligned with the highest priority target object determined in step d), and a sensor signal of the second sensor (BS) is obtained in relation to the target object,
f) at least one further target parameter is extracted by automatic evaluation (AE) of the sensor signal obtained in the second sensor (BS) in relation to a target object,
g) steps d) to f) are carried out repeatedly, optionally with the addition of newly added target objects in accordance with a) to c).

2. Method according to Claim 1, **characterized in that** the at least one further target parameter is used to classify the target object in one of a plurality of classes of a classification.

3. Method according to Claim 1 or 2, **characterized in that** the direction of movement of the target object ($ZO_n$) relative to the image sensor (BS) and/or the speed of the target and/or the distance of the target are/is determined as a first target parameter ($PA_n$).

4. Method according to one of Claims 1 to 3, **characterized in that** the emission of radar radiation or laser radiation by the target object is determined as a first target parameter ($PA_n$).

5. Method according to Claim 4, **characterized in that** a recognizable signature of a radar radiation or laser radiation emitted by the target object is determined as a first target parameter ($PA_n$).

6. Method according to one of Claims 1 to 5, **characterized in that** the target position of a target object is determined as a first target parameter ($PA_n$).

7. Method according to Claim 6, **characterized in that** at least one angle range of the alignment of the second sensor (BS) is predefined, and whether the direction of the target falls into said angle range is checked as an assessment criterion.

8. Method according to Claim 6 or 7, **characterized in that** at least one partial area within the detection zone of the second sensor (BS) is predefined and whether the position of the target lies in said partial area is checked as an assessment criterion.

9. Method according to one of Claims 1 to 8, **characterized in that** a further target parameter extracted from the evaluation of the sensor signal of the second sensor in relation to a target object is considered as a criterion in the assessment.

10. Method according to one of Claims 1 to 9, **characterized in that** at least one assessment criterion is adaptively varied taking the image evaluation (AE) into consideration.

11. Method according to one of Claims 1 to 10, **characterized in that** during the application of the stored assessment criteria ($K_m$) in relation to the plurality of target objects ($ZO_n$) a prioritization value is respectively generated, and the target object with the greatest prioritization value is selected as highest priority target object.

12. Method according to one of Claims 1 to 11, **characterized in that** at least in one of the assessment criteria ($K_m$) a first target parameter ($PA_n$) is compared with a threshold value and a binary value is generated.

13. Method according to one of Claims 1 to 12, **characterized in that** a multi-digit binary value is generated in at least one of the assessment criteria ($K_m$).

14. Method according to Claim 12 or 13, **characterized in that** a plurality of binary values generated according to various assessment criteria ($K_m$) are combined to form a table index, and **in that** with said table index as address, a prioritization table value is read out from a table.

15. Method according to one of Claims 11 to 14, **characterized in that** a weighed prioritization value is determined by summing weighed target parameters ($PA_n$).

16. Method according to Claims 14 and 15, **characterized in that** a prioritization value is determined by combining a prioritization table value and a weighted prioritization value.

17. Method according to one of Claims 1 to 16, **characterized in that** at least one absolute assessment criterion ($K_m$) is applied to a first target parameter ($PA_n$) and upon non-satisfaction thereof the target object ($ZO_n$) is excluded from the current further processing.

18. Method according to one of Claims 1 to 17, **characterized in that** an imaging electrooptical image sensor is used as second sensor (BS).

19. Method according to one of Claims 1 to 18, **characterized in that** a sensor pivotable mechanically about at least one pivot axis is used as second sensor (BS).

20. System for detecting target objects (z), in particular according to a method in accordance with one of Claims 1 to 19, having a first sensor device (SE) including at least one first sensor (S1), an assessment device (BE), an evaluation device (AE) and a second sensor device having at least one second sensor (BS) which is alignable in different spatial directions by means of a controller, in which

   - the first sensor device (SE) detects target objects ($ZO_n$) and respectively determines therefor a spatial direction ($R_i$) with reference to the position of the second sensor (BS), and at least one of a plurality of first target parameters ($PA_n$)
   - the assessment device (BE) assesses target objects ($ZO_n$) with the aid of target parameters ($PA_n$) and stored assessment criteria ($K_m$) and in so doing determines a high priority target object, the time outlay for the alignment of the second sensor (BS) with the target object being determined in the assessment device and considered as criterion in the assessment,
   - the controller aligns the second sensor (BS) with the previously determined highest priority target object, and a sensor signal of the second sensor being obtained in relation to the target object,
   - the evaluation device (AE) extracts at least one further target parameter from the sensor signal of the second sensor.

21. System according to Claim 20, **characterized in that** the second sensor (BS) is arranged on a vehicle.

22. System according to either of Claims 20 and 21, **characterized in that** at least one first sensor (S1, S2) of the first sensor device (SE) is arranged in a fixed spatial assignment to the second sensor (BS).

23. System according to one of Claims 20 to 22, **characterized in that** at least one sensor (S1, S2) of the sensor device (SE) is an active radar sensor or laser sensor.

24. System according to one of Claims 20 to 23, **characterized in that** at least one sensor (S1, S2) of the sensor device (SE) is a passive radar or laser detector.

25. System according to Claim 24, **characterized in that** a signature recognition device is assigned to the passive sensor.

26. System according to one of Claims 20 to 25, **characterized in that** the assessment device (BE) includes a binary addressable table with prioritization table values.

27. System according to one of Claims 20 to 26, **characterized in that** at least one assessment criterion ($K_m$) can be adaptively (AD) set in the assessment device (BE).

**28.** System according to one of Claims 20 to 27, **characterized in that** the second sensor (BS) is variably alignable by motor in azimuth and/or elevation with reference to a sensor carrier.

**29.** System according to one of Claims 20 to 27, **characterized in that** the second sensor (BS) is an image sensor.

**30.** System according to Claim 29, **characterized in that** the image sensor (BS) is designed for the visible or the infrared spectral range.

**31.** System according to either of Claims 29 and 30, **characterized in that** the focal length of an optical system of the image sensor (BS) is variable.

**Revendications**

**1.** Procédé de détection d'objets cibles (z) au moyen d'un premier dispositif de détection (SE) contenant au moins un premier capteur (S1) et un deuxième dispositif de détection contenant au moins un deuxième capteur (BS), le deuxième capteur (BS) pouvant être orienté dans différentes directions spatiales à l'aide d'un dispositif de commande, comprenant les étapes suivantes :

a) détection d'objets cibles ($ZO_n$) à l'aide du premier dispositif de détection (SE),
b) détermination, pour les objets cibles ($ZO_n$), respectivement d'une information relative à la direction spatiale ($R_i$) par rapport à la position du deuxième capteur (BS) et d'au moins un premier paramètre cible ($PA_n$),
c) mise en mémoire d'au moins une partie des objets cibles ($ZO_n$) avec ledit premier paramètre cible ($PA_n$) et l'information relative à la direction spatiale ($R_i$) de l'objet cible ($ZO_n$) par rapport à la position du deuxième capteur (BS),
d) évaluation des objets cibles ($ZO_n$) mis en mémoire à l'aide des paramètres cibles ($PA_n$) et de critères d'évaluation ($K_m$) mis en mémoire à cet effet et détermination, à cette occasion, d'un objet cible ayant la priorité la plus élevée, le temps nécessaire pour la nouvelle orientation du deuxième capteur sur l'objet cible ($ZO_n$) étant déterminé et pris en compte en tant que critère lors de l'évaluation,
e) orientation du deuxième capteur (BS) sur l'objet cible ayant la priorité la plus élevée déterminé à l'étape d) et obtention d'un signal de capteur du deuxième capteur (BS) à propos de l'objet cible,
f) extraction d'au moins un paramètre cible supplémentaire par interprétation automatique (AE) du signal de capteur obtenu à propos d'un objet cible dans le deuxième capteur (BS),
g) répétition de l'exécution des étapes d) à f), le cas échéant en ajoutant des objets cibles additionnels selon a) à c).

**2.** Procédé selon la revendication 1, **caractérisé en ce que** ledit paramètre cible supplémentaire est utilisé pour classer l'objet cible dans l'une des plusieurs classes d'une classification.

**3.** Procédé selon la revendication 1 ou 2, **caractérisé en ce qu'**un premier paramètre cible ($PA_n$) déterminé est le sens de déplacement de l'objet cible ($ZO_n$) par rapport au capteur d'image (BS) et/ou la vitesse de la cible et/ou la distance de la cible.

**4.** Procédé selon l'une des revendications 1 à 3, **caractérisé en ce qu'**un premier paramètre cible ($PA_n$) déterminé est l'émission d'un rayonnement radar ou laser par l'objet cible.

**5.** Procédé selon la revendication 4, **caractérisé en ce qu'**un premier paramètre cible ($PA_n$) déterminé est une signature identifiable du rayonnement radar ou laser émis par l'objet cible.

**6.** Procédé selon l'une des revendications 1 à 5, **caractérisé en ce qu'**un premier paramètre cible ($PA_n$) déterminé est la position cible de l'objet cible.

**7.** Procédé selon la revendication 6, **caractérisé en ce qu'**au moins une plage angulaire de l'orientation du deuxième capteur (BS) est prédéfinie et un critère d'évaluation contrôlé consiste à vérifier si la direction cible se trouve dans cette plage angulaire.

**8.** Procédé selon la revendication 6 ou 7, **caractérisé en ce qu'**au moins une région cible est prédéfinie à l'intérieur de la zone de balayage du deuxième capteur (BS) et un critère d'évaluation contrôlé consiste à vérifier si la position cible se trouve dans cette région cible.

9. Procédé selon l'une des revendications 1 à 8, **caractérisé en ce qu'**un paramètre cible supplémentaire, extrait à partir de l'interprétation du signal de capteur du deuxième capteur à propos de l'objet cible, est pris en compte comme critère lors de l'évaluation.

10. Procédé selon l'une des revendications 1 à 9, **caractérisé en ce qu'**au moins un critère d'évaluation est modifié de manière adaptative en tenant compte de l'interprétation d'image (AE).

11. Procédé selon l'une des revendications 1 à 10, **caractérisé en ce que** lors de l'utilisation des critères d'évaluation ($K_m$) mis en mémoire à propos des plusieurs objets cibles ($ZO_n$), une valeur d'importance prioritaire est à chaque fois générée et l'objet cible dont la valeur d'importance prioritaire est la plus élevée est sélectionné en tant qu'objet cible ayant la priorité la plus élevée.

12. Procédé selon l'une des revendications 1 à 11, **caractérisé en ce qu'**au moins dans l'un des critères d'évaluation ($K_m$), un premier paramètre cible ($PA_n$) est comparé avec une valeur de seuil et une valeur binaire est générée.

13. Procédé selon l'une des revendications 1 à 12, **caractérisé en ce qu'**au moins dans l'un des critères d'évaluation ($K_m$), une valeur binaire à plusieurs chiffres est générée.

14. Procédé selon la revendication 12 ou 13, **caractérisé en ce que** plusieurs valeurs binaires générées selon différents critères d'évaluation ($K_m$) sont regroupées en un index de tableau et **en ce qu'**une valeur tabulaire d'importance prioritaire est lue dans un tableau en tant qu'adresse avec cet index de tableau.

15. Procédé selon l'une des revendications 11 à 14, **caractérisé en ce qu'**une valeur d'importance prioritaire pondérée est déterminée en additionnant les paramètres cibles ($PA_n$) pondérés.

16. Procédé selon la revendication 14 ou 15, **caractérisé en ce qu'**une valeur d'importance prioritaire est déterminée en combinant une valeur tabulaire d'importance prioritaire et une valeur d'importance prioritaire pondérée.

17. Procédé selon l'une des revendications 1 à 16, **caractérisé en ce qu'**au moins un critère d'évaluation ($K_m$) absolu est appliqué à un premier paramètre cible ($PA_n$) et qui, s'il n'est pas rempli, entraîne l'exclusion de l'objet cible ($ZO_n$) de la suite du traitement actuel.

18. Procédé selon l'une des revendications 1 à 17, **caractérisé en ce que** le deuxième capteur (BS) utilisé est un capteur d'image électro-optique.

19. Procédé selon l'une des revendications 1 à 18, **caractérisé en ce que** le deuxième capteur (BS) utilisé est un capteur qui peut être pivoté mécaniquement autour d'au moins un axe de pivotement.

20. Système de détection d'objets cibles (z), notamment d'après un procédé selon l'une des revendications 1 à 19, comprenant un premier dispositif de détection (SE) contenant au moins un premier capteur (S1), un dispositif d'évaluation (BE), un dispositif d'interprétation (AE) et un deuxième dispositif de détection comprenant au moins un deuxième capteur (BS), lequel peut être orienté dans différentes directions spatiales à l'aide d'un dispositif de commande, système avec lequel

- le premier dispositif de détection (SE) détecte des objets cibles ($ZO_n$) et détermine pour ceux-ci respectivement une direction spatiale ($R_i$) par rapport à la position du deuxième capteur (BS) et au moins un parmi plusieurs premiers paramètres cibles ($PA_n$),
- le dispositif d'évaluation (BE), à l'aide de paramètres cibles ($PA_n$) et de critères d'évaluation ($K_m$) mis en mémoire, évalue les objets cibles ($ZO_n$) et détermine à cette occasion un objet cible ayant la priorité la plus élevée, le temps nécessaire pour l'orientation du deuxième capteur (BS) sur l'objet cible étant déterminé dans le dispositif d'évaluation et pris en compte en tant que critère lors de l'évaluation,
- le dispositif de commande oriente le deuxième capteur (BS) sur l'objet cible ayant la priorité la plus élevée déterminé précédemment et un signal de capteur du deuxième capteur à propos de l'objet cible est obtenu,
- le dispositif d'interprétation (AE) extrait au moins un paramètre cible supplémentaire à partir du signal de capteur du deuxième capteur.

**21.** Système selon la revendication 20, **caractérisé en ce que** le deuxième capteur (BS) est monté sur un véhicule.

**22.** Système selon l'une des revendications 20 à 21, **caractérisé en ce qu'**au moins un premier capteur (S1, S2) du premier dispositif de détection (SE) est disposé selon une relation spatiale fixe par rapport au deuxième capteur (BS).

**23.** Système selon l'une des revendications 20 à 22, **caractérisé en ce qu'**au moins un capteur (S1, S2) du premier dispositif de détection (SE) est un capteur radar ou laser actif.

**24.** Système selon l'une des revendications 20 à 23, **caractérisé en ce qu'**au moins un capteur (S1, S2) du premier dispositif de détection (SE) est un capteur radar ou laser passif.

**25.** Système selon la revendication 24, **caractérisé en ce qu'**un dispositif d'identification de signature est associé au capteur passif.

**26.** Système selon l'une des revendications 20 à 25, **caractérisé en ce que** le dispositif d'évaluation (BE) contient un tableau à adressage binaire contenant des valeurs d'importance prioritaire.

**27.** Système selon l'une des revendications 20 à 26, **caractérisé en ce qu'**au moins un critère d'évaluation ($K_m$) peut être réglé de manière adaptative (AD) dans le dispositif d'évaluation (BE).

**28.** Système selon l'une des revendications 20 à 27, **caractérisé en ce que** le deuxième capteur (BS) est orientable variablement de manière motorisée en azimut et/ou en élévation par rapport à un support de capteur.

**29.** Système selon l'une des revendications 20 à 27, **caractérisé en ce que** le deuxième capteur (BS) est un capteur d'image.

**30.** Système selon la revendication 29, **caractérisé en ce que** le capteur d'image (BS) est conçu pour la plage spectrale visible ou infrarouge.

**31.** Système selon l'une des revendications 29 ou 30, **caractérisé en ce que** la distance focale d'un système optique du capteur d'image (BS) peut être modifiée.

Fig. 1

Fig. 2

MZ

MO

0 Grad

90 Grad

(A)                    Fig. 3                    (B)

NP

EB

SP

Fig. 4

BB

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060049974 A1
- US 2007014695 A1